# EUROPÄISCHE PATENTSCHRIFT

(11) **EP 2 921 999 B1**
(45) Veröffentlichungstag und Bekanntmachung des Hinweises auf die Patenterteilung: **29.11.2017**
(21) Anmeldenummer: 15000872.0
(22) Anmeldetag: 16.01.2013
(51) Int. Cl.: G06K 19/077

(54) **Chipkarte mit heraustrennbarer Miniaturchipkarte**
CHIP CARD WITH DETACHABLE MINIATURE CHIP CARD
CARTE À PUCE DOTÉE DE CARTE À PUCE MINIATURE SÉPARABLE

(30) Priorität: 31.01.2012 DE 102012001776
(43) Veröffentlichungstag der Anmeldung: 23.09.2015
(62) Teilanmeldung aus: 13701203.5
(73) Patentinhaber: Giesecke+Devrient Mobile Security GmbH, 81677 München (DE)
(72) Erfinder: Griesmeier, Robert, 83052 Bruckmühl (DE); Reinl, Markus Dr., 81827 München (DE)

(56) Entgegenhaltungen:
- WO-A1-2006/098145
- JP-A- 2006 318 233

## Beschreibung

Die Erfindung bezieht sich auf eine Chipkarte mit einem Kartenkörper, wobei aus dem Kartenkörper eine Minichipkarte heraustrennbar ist. Weiterhin bezieht die Erfindung sich auf eine Verwendung dieser Chipkarte als Teilnehmeridentitätsmodul und ein Verfahren zur Herstellung einer derartigen Chipkarte.

Bei einer Chipkarte handelt es sich grundsätzlich um ein in Baugröße und Ressourcenumfang reduzierten Computer, der einen integrierten Halbleiterschaltkreis als Mikrokontroller und mindestens eine Schnittstelle zur Kommunikation mit einem externen Gerät aufweist. Ihre äußere Bauform ist so gestaltet, dass sie von einem Benutzer leicht zu jeder Zeit mitgeführt werden kann. Die Chipkarte weist entsprechende Sicherheitsfunktionalitäten auf und ist beispielsweise als Smart Card, Massenspeicherkarte, Multimediakarte und/ oder einem elektronische Identitätsdokument ausgestaltet. Insbesondere sind die Chipkarten der hier beschriebenen die Teilnehmeridentifikationskarten, auch Subscriber Identity Module, kurz SIM, eines mobilen Funknetzes.

Bei Chipkarten sind die Abmessungen sowie die Lage der Kontaktflächen gemäß ISO/IEC 7810 und 7816-2 für ein erstes Format ID-1 festgelegt. Aufgrund der Miniaturisierung von mobilen Schreib-Lesegeräten für Chipkarten, beispielsweise durch zunehmende Miniaturisierung von Mobilfunkendgeräten, wurden Miniaturchipkarten in einem zweiten Format ID-000 und Miniaturchipkarten in einem dritten Format ID-3FF definiert. Damit bestehende Produktionsanlagen für Chipkarten nicht umgerüstet werden müssen, die Handhabung mit den Miniaturchipkarten beim Endkunden, Lieferanten, Verpacker etc. einfach bleibt und die für die Miniaturchipkarte benötigte personalisierten Daten für den Endkunden leicht zugänglich blieben, werden weiterhin sogenannte Formadapter verwendet. Diese Formadapter verwenden einen Kartenkörper mit den Abmessungen einer ID-1 Karte, wobei eine Miniaturchipkarte des Formats ID-000 oder ID-3FF heraustrennbar ist.

Das Heraustrennen aus dem ID-1 Kartenkörper wird gemäß dem Stand der Technik auf unterschiedlichen Wegen ermöglicht.

In der EP 0 453 737 B1 wird erstmalig beschrieben, dass eine heraustrennbare Miniaturchipkarte aus einem Kartenkörper erhalten werden kann, indem eine Stanzung im Kartenkörper in Form der Außenkontur der Miniaturchipkarte eingebracht wird, wobei Stegbereiche erhalten bleiben. Zum Entnehmen der Miniaturkarte wird der Stegbereich mittels Laser perforiert und somit für das Heraustrennen geschwächt.

In der EP 1 151411 B1 wird beschrieben, eine weitere Sollbruchstelle in Form einer Perforation in die Miniaturchipkarte einzubringen, um die heraustrennbare Miniaturchipkarte weiter zu miniaturisieren.

In der DE 196 06 789 A1 wird beschrieben, den Kartenkörper entlang der Außenkontur der Miniaturchipkarte bis auf zwei gegenüberliegende Seitenkanten freizuschneiden. Die nicht freigeschnittenen Seitenkanten der Miniaturchipkarte werden als gekerbte Sollbruchstellen ausgestaltet, um eine Schwächung zu erzielen. Die dadurch erhaltenen Verbindungsbrücken halten die Miniaturchipkarte und sind entsprechend robust, da die komplette Haltekraft von zwei Seitenkanten dem Heraustrennen entgegenwirkt. Um die Miniaturchipkarte schließlich überhaupt heraustrennen zu können, wird im Kartenkörper eine weitere Sollbruchstelle vorgesehen, die die Miniaturchipkarte nur teilweise aus dem Kartenkörper trennt, beispielsweise durch eine komplettes Trennen des Kartenkörpers in Längs- oder Querachse entlang einer Außenkontur der Miniaturchipkarte.

Die WO 2006/098145 A1 offenbart eine Chipkarte mit einem Kartenkörper, wobei eine Miniaturchipkarte aus dem Kartenkörper heraustrennbar ist. In der Miniaturchipkarte ist ein integrierter Halbleiterschaltkreis eingebracht. Der Kartenkörper weist entlang der Außenkontur der Miniaturchipkarte bis auf zwei Verbindungen einen vollumfänglichen Spalt auf, durch die die Miniaturchipkarte in dem Kartenkörper gehalten wird.

Zwangsläufig wirken durch die im Stand der Technik beschriebenen Maßnahmen enorme physikalische Kräfte auf die Miniaturchipkarte. Diese Kräfte können zur Zerstörung der Miniaturchipkarte führen. Insbesondere kann es zu einer irreversiblen Delamination von dem im Kartenkörper der Miniaturchipkarte eingebrachten Chipmodul und dem resultierenden Miniaturchipkartenkörper kommen. Zusätzlich oder alternativ wird das Chipmodul beim Heraustrennen zerstört. Zusätzlich oder alternativ können beim Heraustrennen Teile der Miniaturchipkarte abgebrochen werden, wodurch die Karte nicht mehr im Schreib-Lesegerät des Endgeräts gehalten werden kann.

Ein weiteres Problem stellt die fortschreitende Miniaturisierung der Mobilfunkendgeräte dar, die einhergeht mit der Forderung nach einer Miniaturchipkarte, die einerseits weiter verkleinerte Abmessungen als der derzeit kleinste Formfaktor für Miniatur-SIM-Karten 3FF gemäß Standard ISO/ IEC 7816-2 hat und andererseits auch dünner als die gemäß der ISO/IEC 7816-2 vorgeschriebenen Dicke von 760 Mikrometern sein soll. Ein derartiger Standard für einen vierten Formfaktor, kurz 4FF, ist momentan in Diskussion. Aufgrund der geringeren Abmessungen müssen die zum Ausdrücken benötigten Kräfte verringert werden, da verringerte Restwandstärken, also Abstände zwischen Außenkontur der Miniaturchipkarte und einer Chipkavität im Inneren der Miniaturchipkarte, leichter zur Zerstörung der Miniaturchipkarte beim Ausbrechen führen.

Der Erfindung liegt daher die Aufgabe zugrunde, eine Chipkarte mit heraustrennbarer Minichipkarte zu zeigen, die ohne große Krafteinwirkung die Miniaturchipkarte aus dem Kartenkörper heraustrennt. Dabei sollen die Herstellungsprozesse für eine derartige Chipkarte nicht komplexer werden, insbesondere soll die Miniaturchipkarte während der Produktion, beispielsweise nicht bereits aus dem Kartenkörper herausgetrennt werden.

Die Aufgabe der Erfindung wird durch die in den nebengeordneten unabhängigen Patentansprüchen beschriebenen Maßnahmen gelöst. Vorteilhafte Ausgestaltungen sind in den jeweils abhängigen Ansprüchen beschrieben.

Insbesondere wird die Aufgabe durch eine Chipkarte mit einem Kartenkörper gelöst, wobei eine Miniaturchipkarte aus dem Kartenkörper heraustrennbar ist, In der Miniaturchipkarte ist ein integrierter Halbleiterschaltkreis eingebracht. Der Kartenkörper weist entlang der Außenkontur der Miniaturchipkarte bis auf zwei Verbindungen einen vollumfänglichen Spalt auf. Durch die Verbindungen wird die Miniaturchipkarte in dem Kartenkörper gehalten. Die zwei Verbindungen sind an nur einer Seitenkante der Außenkontur der Miniaturchipkarte angeordnet. Beide Verbindungen sind als Stege ausgeformt, wobei die Stegbreite der zwei Stege maximal der Hälfte der jeweiligen Seitenkantenlänge entspricht.

Das Verwenden von nur zwei Stegen anstelle von zwei Verbindungsbrücken hat den Vorteil, dass die Miniaturchipkarte nicht sehr stark im Kartenkörper gehalten wird. Durch das beschriebene Seitenkanten- Stegbreiten Verhältnis von 2:1 oder größer reicht eine Ausdrückkraft von unter 20 Newton, insbesondere 8-10 Newton, aus, um die Miniaturchipkarte aus dem Kartenkörper herauszutrennen. Diese Ausdrückkraft kann sehr leicht vom Benutzer aufgebracht werden und ist aber dennoch groß genug, um in heutigen Produktionsanlagen nach der Ausgestaltung des Kartenkörpers mit Spalt und Steg, den Halbleiterschaltkreis in den Kartenkörper zu bestücken und eine optische sowie elektrische Personalisierung durchzuführen, ohne dass die Miniaturchipkarte bereits während der Produktion aus dem Kartenkörper herausgetrennt wird.

Insbesondere beträgt die Stegbreite an der schmalsten Stelle des Stegs maximal 4 Millimeter. Diese Stegbreite bietet bei den Miniaturchipkarten einerseits die notwendige Haltekraft, um die Miniaturchipkarte während der Produktion auch beim Ausüben eines Drucks durch die Produktionsmaschinen auf die Miniaturchipkarte im Kartenkörper zu halten. Andererseits wird mit dieser Stegbreite verhindert, dass der Miniaturchipkartenkörper und/ oder das eingebrachte Chipmodul beim bestimmungsgemäßen Heraustrennen der Miniaturchipkarte zerstört werden oder delaminieren. Die Stegbreite kann in vorteilhafter Weise weiter verringert werden, wenn die für die Produktion notwendige Haltekraft nicht unterschritten wird. Stegbreiten bis unter 1 Millimeter sind hierbei denkbar. Die Form der Stege ist insbesondere trapezförmig, sodass die Stegränder ausgehend vom Kartenkörper hin zur Miniaturchipkarte aufeinander zulaufen, wobei die schmalste Stelle des Stegs in unmittelbarer Nähe zur Miniaturchipkarte ist.

In vorteilhafter Weise wird der Halbleiterschaltkreis in eine Kavität des Kartenkörpers eingebracht. Diese Kavität befindet sich im Inneren des umlaufenden Spalts, da der Halbleiterschaltkreis Bestandteil der Miniaturchipkarte ist. Der Abstand zwischen dem Außenrand der Chipkavität und zumindest einer Seitenkanten mit Steg ist dabei größer als der Abstand zwischen dem Außenrand der Kavität und den anderen Seitenkanten. Insbesondere ist der Abstand mindestens einer Seitenkante mit Steg doppelt so groß, wie der Abstand der übrigen Seitenkanten.

Weisen drei Seitenkanten den gleichen Abstand auf, so ist ein erster Steg an einer Seitenkante anzuordnen, die nicht identisch mit den drei Seitenkanten ist. Der zweite Steg ist an einer, der Seitenkante mit erstem Steg gegenüberliegenden Seitenkante anzuordnen. Die Seitenkanten mit Steg sind dann insbesondere kürzer als die Seitenkanten ohne Steg. Dieser Abstand zwischen Chipkavität und Außenkontur wird im Folgenden als Restwandstärke bezeichnet. Bei stetig verkleinerten Miniaturchipkarten wird die Restwandstärke stetig geringer. Ist diese Restwandstärke besonders klein, beispielsweise kleiner 1 Millimeter oder insbesondere kleiner 500 Mikrometer, und ist ein Steg in Nähe dieses Bereichs mit geringer Restwandstärke angeordnet, führt ein Ausbrechen der Miniaturchipkarte dazu, dass nicht der Steg, sondern der Bereich der geringen Restwandstärke bricht, wodurch die Miniaturchipkarte zwangsläufig zerstört wäre. Es ist daher von entscheidendem Vorteil, die Stege in Bereichen anzuordnen, in denen eine vergleichsweise große Restwandstärke der Miniaturchipkarte vorhanden ist, um die Miniaturchipkarte beim Heraustrennen aus dem Kartenkörper zu schonen. Bereiche mit großen Restwandstärken sind insbesondere an den Querseiten der Miniaturchipkarte, also an Seiten, die parallel zu der Einführseite der Miniaturchipkarte in ein Endgerät ist.

In einer vorteilhaften Ausgestaltung der Erfindung weist zumindest einer der zwei Stege eine vorderseitige und/ oder rückseitige Einkerbung auf. Die Kerbung ist eine Schwächung des Stegs auf eine Reststegstärke, wodurch der Steg beim Heraustrennen der Karte kontrolliert in dem Bereich der Einkerbung bricht. Für die Einkerbung sind die Parameter Kerbentiefe, Kerbenform, vorderseitige Kerbung, rückseitige Kerbung oder vorder- und rückseitige Kerbung entscheidend und als Einstellparameter derart zu wählen, dass die Miniaturchipkarte einfach herausgetrennt werden kann. Diese genannten Parameter haben insbesondere eine Auswirkung auf die Stegbreite.

Durch diese Einstellparameter der Kerbung wird sichergestellt, dass beim Herausbrechen der Miniaturchipkarte kein Grat des restlichen Stegs an der Miniaturchipkarte bestehen bleibt. Dieser Restgrat ist unbedingt zu vermeiden, um die standardisierte Außenkontur der Miniaturchipkarte nicht zu übersteigen. Würde ein Grat bestehen bleiben, könnte eine Miniaturchipkarte nicht oder nur falsch in der Schreib-/Leseeinheit eingeführt werden.

In vorteilhafter Weise weist die Miniaturchipkarte im Bereich der Stege eine Einbuchtung auf. In dieser Einbuchtung ist die Einkerbung des Steges angeordnet. Dadurch wird garantiert, dass der Steg garantiert in einem Bereich bricht, der innerhalb der Außenkonturen der Miniaturchipkarte liegt und kein Restgrat außerhalb der Außenkontur vorhanden ist, wenn die Miniaturchipkarte herausgetrennt wurde. Dabei ist zu beachten, dass das Einbuchten die Restwandstärke weiter schmälert, was zu dem bereits beschrieben Zerstören der Miniaturchipkarte führen kann. Die Einbuchtung ist daher bevorzugt in Bereichen, in denen die Restwandstärke ausreichend groß ist, insbesondere sind Seitenkanten zu wählen, bei denen die Restwandstärke größer ist, als bei anderen Seitenkanten der Miniaturchipkarte.

Gemäß der beanspruchten Erfindung sind die zwei Stege auf einer Rotationsachse angeordnet, wobei die Rotationsachse parallel aber beabstandet von der Längsachse der Miniaturchipkarte verläuft. Durch den Abstand wirkt ein Hebel auf die Stege beim Heraustrennen, der dazu führt, dass weniger Kraft bzw. Druck auf die Miniaturchipkarte notwendig ist, um diese aus dem Kartenkörper herauszutrennen. Mit Rotationsachse wird die Achse verstanden, um die die Miniaturchipkarte rotiert, dreht bzw. herausklappt, wenn sie aus dem Kartenkörper herausgetrennt wird.

In einer nicht erfindungsgemäßen Ausgestaltung, lässt sich der Abstand zwischen Längsachse und Rotationsachse über die Position der Stege variieren, wobei ein größerer Abstand dazu führt, dass aufgrund eines größeren Hebels weniger Kraft aufgewendet werden muss, um die Miniaturchipkarte aus dem Kartenkörper herauszutrennen. Dadurch kann die Stegbreite verkleinert sowie unabhängig davon auch die Einkerbung vertieft werden. Die Belastung der Miniaturchipkarte wird somit weiter verringert und ein Zerstören beim Heraustrennen vermieden.

In einer davon alternativen erfindungsgemäßen Ausgestaltung verläuft die Rotationsachse parallel aber beabstandet von der Querachse der Miniaturchipkarte, wobei bei der Querachse aufgrund veränderter Hebelwirkungen leicht größere Kräfte notwendig sind als bei der Längsachse, da die Abmessungen der Querachse geringer sind als die Abmessungen der Längsachse. Gemäss der Erfindung werden die zwei Stege an nur einer Seitenkante der Miniaturchipkarte angeordnet. Dadurch sind die Hebelwirkungen maximal, die Stege können hier die geringste Stegbreite aufweisen, wodurch die Belastung auf die Restwandstärke der Miniaturchipkarte am geringsten ist. Eine Zerstörung der Miniaturchipkarte wäre hier am geringsten.

In einer bevorzugten Ausgestaltung hat die Miniaturchipkarte eine geringere Dicke als die bislang standardisierte Normdicke von 760 Mikrometer gemäß ISO/IEC 7816-2. Die Stegdicke ist dadurch ebenfalls geringer, wodurch weniger Kraft zum Heraustrennen aufgewendet werden muss. Insbesondere ist die Miniaturchipkarte maximal 700 Mikrometern dick.

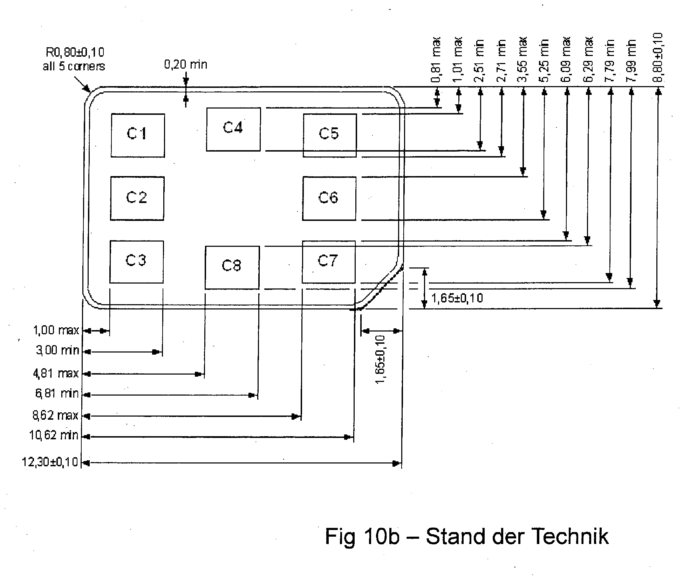

In einer bevorzugten Ausgestaltung hat die Miniaturchipkarte verkleinerte Abmessungen der Außenkontur als der derzeitige dritte Formfaktor 3FF für Miniatur-SIM-Karten gemäß Standard ISO/IEC 7816-2. Ein derartiger Standard für einen vierten Formfaktor, kurz 4FF, ist momentan in Diskussion. Ein Beispiel für eine derartige Karte ist in Figur 10b maßstabsgetreu dargestellt. Die Miniaturchipkarte weist dabei eine erste Seitenkantenlänge von 12,3 mm und eine zweite Seitenkantenlänge von 8,8mm auf. Eine Orientierung für den Benutzer ist in Form einer abgeschrägten Seitenkante vorhanden. Die erfindungsgemäßen Stege sind bevorzugt an der Seitenkante angeordnet, an denen die Restwandstärke maximal ist.

Im Erfindungsgrundgedanken ist ebenfalls die Verwendung einer Miniaturchipkarte als Teilnehmererkennungsmodul, kurz SIM für ein Mobilfunknetzwerk in einem Endgerät. Derartige Endgeräte weisen bei stetig steigender Funktionalität zunehmende Miniaturisierung der darin befindlichen Bauteile auf, wodurch auch die Schreib-/Leseeinheit für SIM verkleinert werden muss, wodurch die Miniaturchipkarten weiter miniaturisiert werden müssen.

Im Erfindungsgrundgedanken ist weiterhin ein Verfahren zur Herstellung einer Chipkarte mit folgenden Verfahrensschritten: Herstellen des flächigen Trägers in einem ersten Format mittels Spritzguss- oder Laminierverfahren; Einbringen einer Kavität; Stanzen des vollumfänglichen Spalts entlang der Außenkontur der Miniaturchipkarte, wobei der Spalt an den Stellen der zwei Stege unterbrochen ist; Einbringen des Halbleiterschaltkreises in die Kavität; und optisches sowie elektrisches Personalisieren der Chipkarte.

Das optische Personalisieren bedeutet, dass teilnehmerspezifische Daten, beispielsweise eine IMSI, eine PIN, eine PUK sowie eine Seriennummer der Chipkarte auf den Kartenkörper der Chipkarte gedruckt werden. Dabei können diese Daten innerhalb oder außerhalb der Außenkontur der Miniaturchipkarte angeordnet werden.

Das elektrische Personalisieren erfolgt insbesondere durch kontaktbehaftetes Kontaktieren des Halbleiterchips über ein Kontaktfeld, wodurch benutzerspezifische, teilnehmerspezifische Daten sowie Daten zur Anmeldung und Absicherung an einem Mobilfunknetzwerk in einen Speicherbereich des Halbleiterschaltkreises eingeschrieben werden.

Auf die Chipkarte wird weiterhin ein Designdruck appliziert, beispielsweise in einem Offsetdruck oder einem Siebdruckverfahren.

In einer vorteilhaften Ausgestaltung wird die Miniaturchipkarte vollumfänglich entlang seiner Außenkontur vor dem Stanzschritt vorgestanzt, sodass die nach dem Stanzschritt vorhandenen zwei Stege eingekerbt sind.

In einer vorteilhaften Ausgestaltung wird der Halbleiterschaltkreis mittels Heißsiegeltechnik, Flüssigkleber und/oder druckaktivierbarem Kleber in die Kavität eingeklebt.

In einer vorteilhaften Ausgestaltung erfolgt das Einbringen der Kavität durch einen Frässchritt.

In einer bevorzugten Ausgestaltung wird der flächige Träger in einem Spritzgussverfahren hergestellt, wobei dabei die Kavität bereits mit ausgeformt wird. Der Frässchritt zum einbringen der Kavität kann dann entfallen, wodurch das Herstellungsverfahren kostengünstiger und effizienter ist.

In einer vorteilhaften Ausgestaltung wird die Chipkarte in einem Spritzgussverfahren hergestellt.

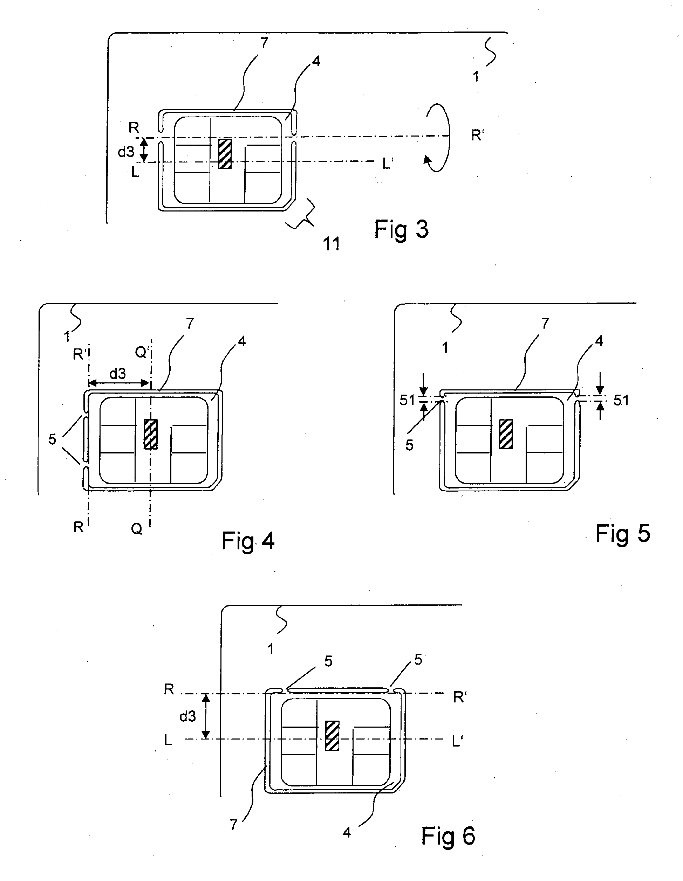

Nachfolgend wird anhand von Figur 6 die Erfindung und Vorteile der Erfindung näher erläutert, wobei Figur 6 lediglich ein Ausführungsbeispiel der Erfindung beschreibt. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein. Auf Figuren, die maßstabsgetreu gezeichnet sind, wird explizit hingewiesen.

Es zeigen:
Figur 1 Eine Chipkarte in unterschiedlichen Formaten gemäß dem Stand der Technik
Figur 2 Eine nicht erfindungsgemäße Ausführung einer Chipkarte
Figur 3 Eine nicht erfindungsgemäße Ausführung einer zur Figur 2 alternativen Chipkarte
Figur 4 Eine erfindungsgemäße Ausführung einer zu Figuren 2 und 3 alternativen Chipkarte
Figur 5 Eine nicht erfindungsgemäße Ausführung einer zu Figuren 2 bis 4 alternativen Chipkarte
Figur 6 Eine erfindungsgemäße Ausführung einer zu Figur 4 alternativen Chipkarte
Figur 7 Ein Chipmodul für eine erfindungsgemäße Chipkarte
Figur 8 Ein Querschnitt der erfindungsgemäßen Chipkarte nach Figur 2 an einer Schnittlinie A-A'
Figur 9 Ein Querschnitt der erfindungsgemäßen Chipkarte nach Figur 2 an einer Schnittlinie B-B'
Figur 10a eine maßstabsgetreue Darstellung der in Figur 2 dargestellten Chipkarte
Figur 10b eine maßstabsgetreue Darstellung einer beispielhaften Chipkarte im vierten Format gemäß dem Stand der Technik
Figur 11 eine maßstabsgetreue Darstellung eines erfindungsgemäßen Stegs gemäß der Figuren 2 bis 6 in Draufsicht
Figur 12 eine maßstabsgetreue Darstellung eines erfindungsgemäßen Stegs gemäß der Figuren 2 bis 6 im Querschnitt

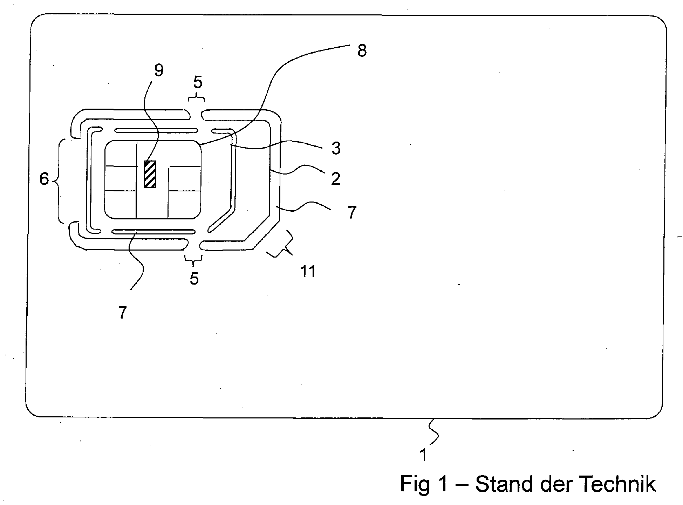

Figur 1 zeigt eine Chipkarte in unterschiedlichen Formaten gemäß dem Stand der Technik. Dabei ist ein Kartenkörper 1 in einem ersten Format, dem ID-1 Format, dargestellt. In den Kartenkörper 1 ist ein äußerer Spalt 7 entlang einer Außenkontur einer Miniaturchipkarte 2 in einem zweiten Format, dem ID-000 oder auch Mini-SIM, Format genannt, gezeigt. Der äußere Spalt 7 weist drei Unterbrechungen auf, wodurch die ID-000 Karte 2 in dem Kartenkörper 1 gehalten wird. Diese Unterbrechungen sind zwei Verbindungsstege 5 an sich gegenüberliegenden Seitenkanten der ID-000 Karte 2 und eine Verbindungsbrücke 6 an einer der Einführseite der Miniaturchipkarte parallelen Seitenkante. Darüber hinaus weist der Kartenkörper einen inneren Spalt 7 auf, der entlang einer Außenkontur einer Miniaturchipkarte 3 in einem dritten Format, dem ID-3FF oder auch Mikro-SIM genannt, gezeigt. Ähnlich wie bei der ID-000 formatigen Karte 2, wird der innere Spalt 7 unterbrochen. Die 4 Unterbrechungen sind im inneren Spalt 7 als vier Stege 5 ausgestaltet. Innerhalb des inneren Spalts 7 ist das Chipmodul 8 mit einem darin integrierten Halbleiterschaltkreis 9 eingebracht. Sowohl eine Seitenkante der Miniaturchipkarte 2 als auch der Miniaturchipkarte 3 wird abgeschrägt, wodurch die Orientierungshilfe 11 erhalten wird. Diese Orientierungshilfe 11 dient dem Endnutzer dazu, die Miniaturchipkarte bestimmungsgemäß im Schreib-Lesemodul eines Endgeräts einzustecken.

Dieser Kartenkörper 1 gemäß Figur 1 ermöglicht es nun, eine Miniaturchipkarte 2 oder 3 aus dem Kartenkörper 1 herauszutrennen. Dazu werden durch Ausüben einer Kraft auf die Miniaturchipkarte 2 oder 3 der Verbindungsbrücken 6 sowie die Stege 5 zerstört, wodurch die Miniaturchipkarte 2 oder 3 entnommen werden kann. Die Miniaturchipkarte 2 oder 3 wird dann bestimmungsgemäß ins Endgerät eingebracht und verbraucht aufgrund der geringeren Abmessungen der Außenkontur weniger Platz. In der Folge können die Endgeräte kleiner ausgestaltet und/ oder mit mehr Funktionalitäten ausgestattet werden. Aufgrund der großen Abmessungen und dem vergleichsweise geringen Chipmodul ist die Ausgestaltung der Stege 5 und Brücken 6 bei der Miniaturchipkarte 2 im ID-000 Format verhältnismäßig unkritisch, da zwischen Chipmodul und Außenkontur eine genügende Restwandstärke vorhanden ist, die beim Ausüben des Drucks auf die Miniaturchipkarte 2 dazu führt, dass der Steg 5 und die Brücke 6 zerstört wird, aber auf die Miniaturchipkarte 2 kein unnötigen mechanischen Stress ausgeübt wird. Problematischer wird das Ausbrechen des ID-3FF 3 aus dem Kartenkörper 1, da beim Heraustrennen der ID-3FF gewölbt wird. Dieses Wölben verursacht mechanische Belastungen des Chipmoduls, die zu dauerhaften elektrischen Funktionsstörungen führen können oder den Miniaturchipkartenkörper anbrechen bzw. zerbrechen. Auch die Delamination von Kartenkörper und Chipmodul kann eine Folge sein. Der direkte Druck auf das Chipmodul ist daher unbedingt zu vermeiden.

Eine weitere Herausforderung bei der Ausgestaltung der Stege ergibt sich durch das eingangs beschriebene Verhindern des Restgrats, der nach dem Heraustrennen in den Bereichen der Stege 5 oder Brücken 6 bestehen bleiben könnte. Dieser Grat wird verhindert, indem Einbuchtungen an den Stellen der Stege 5 geformt sind und der Steg 5 innerhalb diesen Einbuchtungen zerstört wird. An diesen Stellen verringert sich die Restwandstärke d weiter, was bei einer ID-000 aufgrund der großen Abmessungen kein Problem darstellt. Bei ID-3FF oder kleiner wird die dünnere Restwandstärke aber zu mechanischem Stress führen, der zur Zerstörung oder Funktionsstörungen führt.

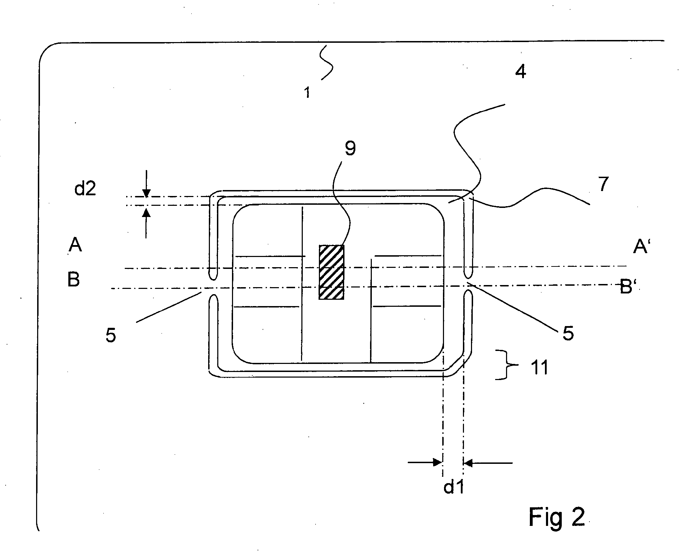

In Figur 2 ist eine nicht erfindungsgemäße Ausführung einer Chipkarte gezeigt. Der Kartenkörper 1, hier nicht vollständig gezeichnet, weist entlang einer Außenkontur der ID-3FF oder alternativ der Miniaturchipkarte 4, auch ID-4ff oder Nano-SIM genannt, einen Spalt 7 auf. Der Spalt 7 ist erfindungsgemäß nur noch an zwei Stellen unterbrochen. Die Unterbrechungen sind in Form von Stegen 5 ausgebildet, wobei die Stege 5 hier an zwei gegenüberliegenden Seitenkanten der Miniaturchipkarte 4 angeordnet sind.

Die Seitenkanten mit den Stegen sind parallel zu einer Einführseite der Miniaturchipkarte 1 in ein Endgerät. Dies ist beabsichtigt, da der Abstand d1 zwischen Chipkavität 9 und Miniaturchipkartenaußenkontur an diesen Seitenkanten mindestens gleich groß, insbesondere aber größer ist als der Abstand d2 zwischen Chipkavität 9 und Miniaturchipkartenaußenkontur an den Seitenkanten, die orthogonal zur Einführseite sind. Insbesondere ist der Abstand d1 mindestens doppelt so groß wie der Abstand d2. Durch den größeren Abstand d1, also der größeren Restwandstärke an dieser Seitenkante, ist der Miniaturchipkartenkörper an diesen Stellen stabiler aufgebaut. In einer konkreten Ausführung nicht gemäss der Erfindung weisen drei Seitenkanten einen Abstand d2 von 0,5 Millimeter und eine Seitenkante einen Abstand d1 von 1,18 Millimeter auf. Weisen drei Seitenkanten einen gleichen Abstand d2 auf, so wird ein Steg 5 an einer der Seitenkante mit Abstand d1 gegenüberliegenden Seitenkante angeordnet.

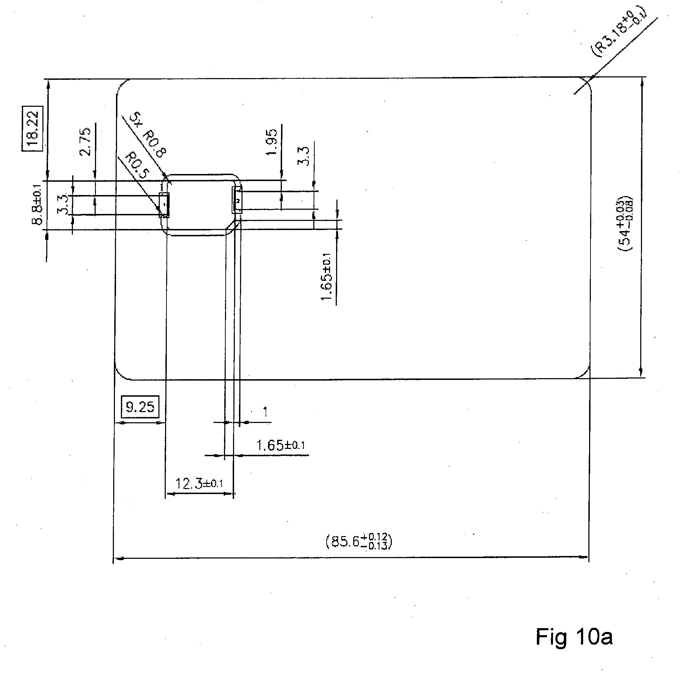

Dadurch führt ein Heraustrennen der Miniaturchipkarte 4 zum Durchtrennen der Stege 5 und nicht zum Delaminieren der Miniaturchipkarte 4. Dieses Problem stellt sich insbesondere bei Restwandstärken die kleiner 1 Millimeter sind. Im Bereich der Orientierungshilfe 11 ist die Restwandstärke d sogar nur 500 Mikrometer groß, wodurch Stege 5 in diesen Bereichen zu Zerstörung der Miniaturchipkarte 3 oder 4 führen würden. Ein Beispiel für die Abmaße der Miniaturchipkarte 4 ist in Figur 10 gegeben.

In Figur 3 ist eine nicht erfindungsgemäße Ausführung einer Chipkarte gezeigt, die alternativ zur Ausführung der Figur 2 ist. Im Folgenden wird nur auf die Unterschiede zwischen den Figuren 2 und 3 eingegangen. Im Unterschied zur Figur 2 ist in Figur 3 die Anordnung der Stege 5 alternativ gewählt. Insbesondere wurden die Stege 5 in einem Abstand d3 zur Längsachse L-L' der Miniaturchipkarte 3, 4 angeordnet. Diese Längsachse L-L' halbiert dabei diejenigen Seitenkanten der ID-3FF 3 oder ID-4FF 4, die parallel zur Einführseite liegen. Die Anordnung der Stege 5 erfolgt dabei auf einer Rotationsachse R-R', die parallel zur Längsachse L-L' verläuft. Der Abstand d3 sollte möglichst groß gewählt werden. Durch eine derartige Anordnung der Stege 5 wird der ID-3FF 3 oder ID-4FF 4 einer Rotation entlang der Rotationsachse R-R' ausgesetzt, wodurch der ID-3FF 3 oder ID-4FF 4 aus dem Kartenkörper 1 herausgedreht, bzw. herausgeklappt wird. Durch den Abstand d3 wird eine Hebelkraft auf die Stege 5 ausgeübt, wodurch der Druck auf den ID-3FF 3 oder ID-4FF 4 zum Heraustrennen aus dem Kartenkörper 1 stark verringert werden kann. Darüber hinaus kann die Ausgestaltung der Stege angepasst werden. Insbesondere kann die Stegbreite 51 stark verringert werden, wodurch die auf die Miniaturchipkarte 3 oder 4 wirkende Kraft beim Ausbrechen weiter verringert wird. Ein Verwölben der Miniaturchipkarte 3 oder 4 ist wesentlich vermindert.

In Figur 4 ist eine zu den Figuren 2 und 3 alternative Ausführungsform gemäß der beanspruchten Erfindung gezeigt. Im Folgenden wird auch hier nur auf die Unterschiede zu den vorangegangenen Figuren 2 oder 3 eingegangen. Wesentlicher Unterschied in Figur 4 ist die Anordnung der Stege an nur einer Seitenkante. Damit ist der Abstand d3 maximiert, die Kraft zum Heraustrennen des ID-3FF oder ID-4FF wird dadurch auf ein Minimum reduziert. Aufgrund der geringen Abmessungen von ID-3FF und ID-4FF ist es möglich, die Unterbrechungen des Spalts 7 an nur einer Seitenkante anzuordnen. Diese Anordnung ist beim ID-000 nicht sinnvoll umsetzbar, da aufgrund der vergleichsweise großen Ausmaße des 2FF, die Stege 5 eine große Stegbreite 51 aufweisen müssen, um den ID-000 im Kartenkörper halten zu können. Diese Stegbreite 51 kann dann nicht einfach verkleinert werden, da die während der Produktion der Chipkarte auftretenden Kräfte den ID-000 heraustrennen würden. Bei den Abmessungen des ID-3FF oder ID-4FF ist dies allerdings aufgrund der geringeren Abmaße eine derartige Anordnung praktikabel. Eine zusätzliche Halterung an der gegenüberliegenden Seitenkante oder in Form einer zusätzlichen rückseitigen Halte- oder Klebeschicht kann hier entfallen.

Ein weiterer wichtiger Unterschied ist die Rotation des ID-3FF oder ID-4FF entlang einer Rotationsachse R-R', welche parallel einer Querachse Q-Q' im Abstand d3 erfolgt. Hiermit werden zwei Kriterien erfüllt, zum Einen erfolgt die Anordnung der Stege 5 in einem Bereich mit vergleichsweise viel Restwandstärke d, zum Anderen können die Stege 5 eine geringe Stegbreite 51, insbesondere weniger als 1,5 Millimetern aufweisen, da aufgrund des Abstands d3 eine Hebelkraft auf die Stege 5 wirkt, die das Heraustrennen erleichtert.

In Figur 5 ist eine zu den Figuren 2 bis 4 alternative Chipkarte gezeigt. Im Folgenden wird auch hier nur auf die Unterschiede zu den vorangegangenen Figuren 2 bis 4 eingegangen. Die Anordnung der Stege 5 erfolgt hier an einer Seitenkante, die orthogonal zur Einführseite der Miniaturchipkarte ist. Prinzipiell ist hier der Abstand d2 ebenfalls kleiner als d1, sodass prinzipiell eine Anordnung der Stege 5 an dieser Seitenkante der ID-3FF oder ID-4FF nicht erfolgen sollte, da die Stege 5 aber auf einer Rotationsachse R-R' im Abstand d3 von der Längsachse L-L' angeordnet sind, können die Stegbreiten 51 stark verringert werden. Die dann beim Ausdrehen oder Ausklappen wirkenden Kräfte zerstören den ID-3FF oder ID-4FF nicht. Zusätzlich ist die Anordnung in einem Eckbereich der Miniaturchipkarten ID-3FF oder ID-4FF eher unkritisch, da die beschriebenen Restwandstärken in diesen Bereichen nicht minimal sind.

In Figur 6 ist eine zu der Figur 4 alternativen Chipkarte gezeigt, die der beanspruchten Erfindung entspricht. Im Folgenden wird hier nur auf die Unterschiede zu Figur 4 eingegangen. Die Rotationsachse R-R' ist in Figur 6 parallel und im Abstand d3 von der Längsachse L-L', was durch die Anordnung der Stege 5 an einer zur Einführseite orthogonalen Seitenkante erzielt ist. Ansonsten verhält sich die Chipkarte wie in den vorangegangenen Figuren 2 bis 5 bereits beschrieben ist.

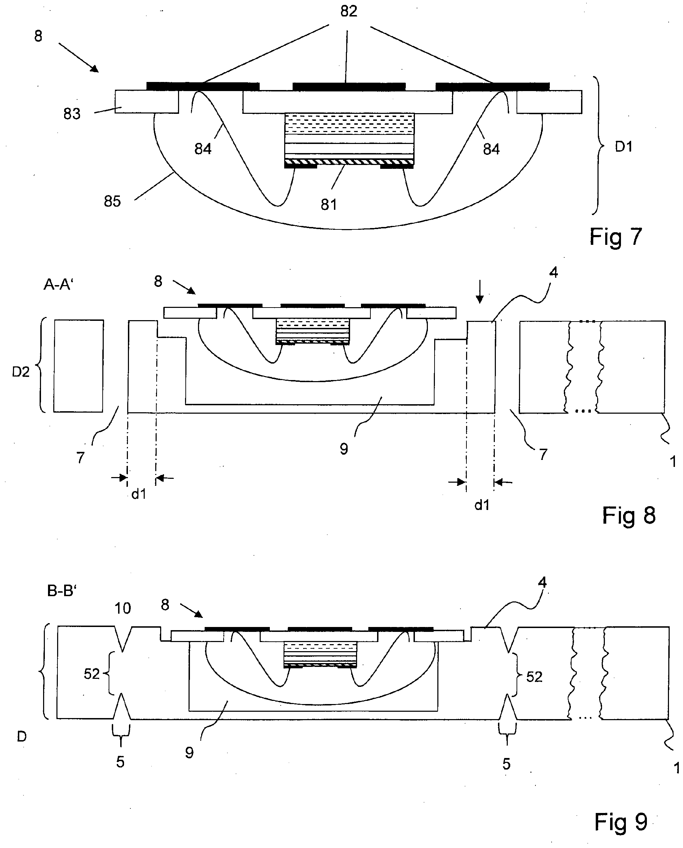

In Figur 7 ist ein Chipmodul 8 gezeigt, wie es in eine Chipkavität 9 der Miniaturchipkarte ID-3FF oder ID-4FF eingebracht wird. Das Chipmodul 8 weist eine Trägerschicht 83 auf. Auf einer Kontaktfeldoberseite der Trägerschicht 83 wird ein Kontaktfeld mit Kontaktflächen 82 ausgebildet. Dies ist insbesondere eine durch Galvanisierung erzielte Metallisierung dieser Oberseite mit aus den Metallen Kupfer, Nickel und Gold. Auf der der Kontaktfeldoberseite gegenüberliegenden Chipoberseite der Trägerschicht 83 wird ein Chip 81 auf die Trägerschicht aufgebracht. Eine elektrische Verbindung 84 zwischen Chip und Kontaktflächen erfolgt durch die hier dargestellte Wire-Bond Technologie oder mittels der nicht dargestellten Flip-Chip-Technologie. Zum Schutz des Chips 81 wird ggf. eine Vergussmasse 85 beispielsweise in Form eines Hot-Melt Klebers oder einer Globe-Top Masse appliziert. Das Chipmodul weist dabei eine Dicke D1 von 500 Mikrometern auf.

Alternativ zu einem Chipmodul 8 können auch Chips 81 in Flip-Chip-Technologie direkt in die Chipkavität 9 appliziert werden.

In Figur 8 ist ein Querschnitt der in Figur 2 dargestellten Chipkarte an der Schnittlinie A-A' dargestellt. Der Kartenkörper 1 weist dabei einen Spalt 7 auf, der den äußeren Teil des Kartenkörpers 1 von der Außenkontur der Miniaturchipkarte 4 teilt. Der Kartenkörper 1 weist eine Dicke D2 auf, die bei den Formaten ID-1, ID-000 und ID-3FF zwischen 680 Mikrometern bis 840 Mikrometern, nominal 760 Mikrometer beträgt, allerdings bei einer weiteren Miniaturisierung auf ID-4FF auf maximal 700 Mikrometern verkleinert wird. Das gemäß Figur 7 beschriebene Chipmodul 8 wird in eine Chipkavität 9 eingebracht. Die Chipkavität 9 ist beispielsweise mittels eines Fräswerkzeugs eingebracht. Das Chipmodul 9 wird mittels Heißsiegeltechnik, Flüssigkleber oder unter Verwendung eines druckaktivierbaren Klebemittels in die Kavität 9 eingebracht und dort damit mechanisch fixiert.

Dabei ist erkennbar, dass die Rückwand des Kartenkörpers im Bereich der Kavität sehr dünn ist, um das Chipmodul 9 mit seiner Dicke D1 einbringen zu können. Aufgrund der dünneren Rückwand, also der geringeren Rückwandstärke, beispielsweise wenige hundert Mikrometer ist der ID-4FF per se bereits instabiler als die anderen Formfaktoren ID-1, ID-000 und ID-3FF. Bei Chipmodulen 9 beträgt die Rückwandstärke beispielsweise 210 Mikrometer. Alternativ kann die Rückwandstärke der Chipmodule beispielsweise 320 Mikrometer betragen.

Weiterhin ist erkennbar, dass die Restwandstärke d1 im Vergleich zu den Ausmessungen der Miniaturchipkarte 3 oder 4 bereits sehr dünn ist. Die Kombination aus kleiner Restwandstärke d2 und kleinerer Dicke D2 bedingt, dass die Stege 5 gut dimensioniert sein müssen, um keine Zerstörung der Miniaturchipkarte 3 oder 4 bzw. keine elektrische Fehlfunktion des Chipmoduls 9 beim Heraustrennen zu erhalten.

In Figur 9 ist ein Querschnitt der in Figur 2 dargestellten Chipkarte an der Schnittlinie B-B' dargestellt. Im Unterschied zu Figur 8 verläuft diese Schnittlinie durch die Stege 5 durch. Um eine Zerstörung des ID-3FF und ID-4FF zu verhindern müssen die Stege 5 mit einer Vielzahl von Parametern angepasst werden. Folgende Aussagen bezüglich der Stege 5 treffen auf alle erfindungsgemäßen Ausführungen zu. Insbesondere ist die Stegbreite 51 im Verhältnis zur Seitenkante maximal halb so groß. Idealerweise ist die Stegbreite 51 nur ein Bruchteil der Seitenkante, beispielsweise Faktor 5 bis 10 kleiner als die Seitenkante. Um den Steg 5 bereits an einer vordefinierten Stelle brechen lassen zu können, ist dieser speziell ausgestaltet. Insbesondere ist eine vorderseitige Einkerbung 10 eingebracht. Diese Kerbung wird mittels eines Stanzwerkzeugs erreicht. Um den Steg 5 weiter zu schwächen, wird ggf. auch die Rückseite des Stegs 5 vorgekerbt, sodass eine rückseitige Kerbung 10 erhalten wird. Die Kerbtiefe auf einer oder beiden Seiten des Stegs 5 entscheidet, wieviel Reststegstärke 52 erhalten bleibt. Je weniger Reststegstärke 52 erhalten bleibt, umso weniger Kraft ist notwendig, um den Steg 5 zu zerstören. Weiterer Stegparameter ist die Kerbform, die in Figur 9 als dreieckig dargestellt ist. Alternativ kann eine halbrunde, elliptische oder alternative geometrische Form gewählt werden. Die Parameter Kerbentiefe, Kerbenform, vorderseitige Kerbung, rückseitige Kerbung und Öffnungswinkel der Kerbe 10 entscheiden, wieviel Kraft aufzuwenden ist, um den Steg 5 zu zerstören. Diese Parameter beeinflussen direkt die Stegbreite 51.

In den Figuren 10 bis 12 sind maßstabsgetreue nicht erfindungsgemäße Ausführungsformen für einen vierten Formfaktor ID-4FF mit den erfindungsrelevanten Maßnahmen dargestellt. In Figur 10a ist ein Kartenkörper 1 mit den Außenmaßen 85,6 mal 54 Millimetern dargestellt, in dem eine Miniaturchipkarte 4 anhand zweier Stege 5 gehalten wird. Die Stegbreite beträgt hier 3,3 Millimeter, was ungefähr einem Drittel der jeweiligen Seitenkante entspricht. Der Spalt 7 weist eine Dicke von 1 Millimeter auf. Die Stege 5 sind hier auf der Längsachse L-L' angeordnet. In Figur 10b ist eine maßstabsgetreue Darstellung einer beispielhaften Miniaturchipkarte 4 im vierten Format ID-4FF dargestellt, die in einem Kartenkörper 1 im ID-1 Format eingebracht wird.

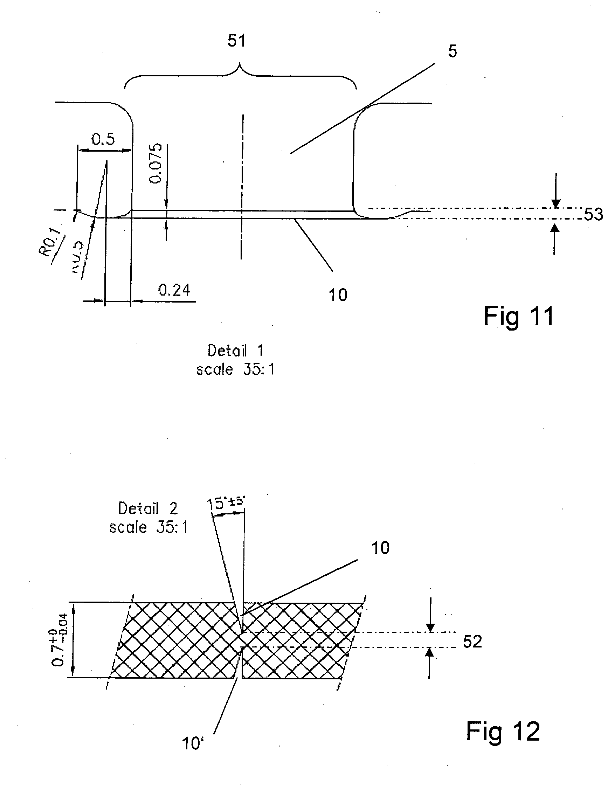

Die Stegbreite 3,3 Millimeter ist vergleichsweise groß gewählt, da die komplette Außenkontur der Miniaturchipkarte 4 mittels eines Vorstanzwerkzeugs vorgestanzt wurde, wodurch die Stege 5 eine vorderseitige und eine rückseitige Einkerbung 10 erhalten haben, wie in Figur 11 und 12 dargestellt ist. Aufgrund der tiefen Vorkerbungen ist eine geringe Reststegstärke 52 erhalten worden, wodurch die Stegbreite 51 mit 3,3 Millimetern entsprechend groß ausgefallen ist, um die Miniaturchipkarte 4 während der Produktion, also beim Bestücken mit dem Chipmodul, dem optischen und elektrischen Personalisieren nicht bereits herauszutrennen.

Die Figuren 11 und 12 zeigen eine maßgetreue Darstellung eines Steges im Maßstab 35:1. In Figur 11 ist die vorderseitige Einkerbung 10 zu erkennen, die in einer Einbuchtung 53 in der Miniaturchipkarte 4 angeordnet ist. Dadurch werden ggf. Gratbildungen beim Heraustrennen innerhalb der Einbuchtung 53 verbleiben, sodass die Außenkontur der Miniaturchipkarte 4 nicht durch diesen Grat vergrößert wird. Die Einbuchtung 53 beträgt hier beispielsweise 75 Mikrometer. In Figur 12 sind die Reststegstärke 52 sowie die Formgebung der Einkerbung 10 eines Stegs detailliert dargestellt. Dabei weist die vorderseitige Einkerbung 10 eine feste Einkerbtiefe von 250 Mikrometern und die rückseitige Einkerbung 10' eine variable Einkerbtiefe auf. Die Einkerbform ist dreieckig und weist einen Öffnungswinkel von 10-20 Grad auf. Die Reststegstärke 52 beträgt in diesem Fall 200 Mikrometer, was ein absoluter Tiefstwert sein sollte. Nur durch die vergleichsweise große Stegbreite von 3,3 Millimetern ist es für diese Miniaturchipkarte 4 möglich, das Heraustrennen während der Produktion zu verhindern, obwohl die Ausdrückkraft für diese Stegparameter bei ca. 3-4 Newton liegt, wodurch der während der Produktion auftretende Druck auf die Miniaturchipkarte bereits zum Heraustrennen führen kann. Eine Ausdrückkraft von unter 20 Newton, idealerweise zwischen 8-10 Newton sollte dabei angestrebt werden. Dazu müssten die Stegparameter in diesem konkreten Fall angepasst werden, beispielsweise die Reststegstärke 52 vergrößert, beispielsweise 350 Mikrometer oder die rückseitige Einkerbung als Produktionsschritt weggelassen werden.

### Bezugszeichenliste

- 1: Kartenkörper in einem ersten Format, ID-1
- 2: Miniaturchipkarte in einem zweiten Format, ID-000, Mini-SIM
- 3: Miniaturchipkarte in einem dritten Format, ID-3FF, Mikro-SIM
- 4: Miniaturchipkarte in einem vierten Format, ID-4FF, Nano-SIM
- 5: Verbindungssteg
51 Stegbreite
52 Reststegstärke
53 Stegeinbuchtung in der Miniaturchipkarte
- 6: Verbindungsbrücke
- 7: Spalt
- 8: Chipmodul
81 Halbleiterschaltkreis, Chip
82 Kontaktflächen
83 Trägerschicht
84 Elektrische Verbindung zwischen Chip und Kontaktfläche
85 Vergussmasse
- 9: Chipkavität in Miniaturchipkarte
- 10: Einkerbung
- 11: Orientierungshilfe
- A-A': Schnittlinie durch die Miniaturchipkarte mit Spalt
- B-B': Schnittlinie durch die Miniaturchipkarte mit Steg
- L-L': Längsachse der Miniaturchipkarte
- Q-Q': Querachse der Miniaturchipkarte
- R-R': Rotationsachse der Miniaturchipkarte beim Heraustrennen
- d1: Abstand 1 zwischen Kavität und Miniaturchipkartenaußenkontur
- d2: Abstand 2 zwischen Kavität und Miniaturchipkartenaußenkontur
- d3: Abstand zwischen Längs- oder Querachse und Rotationsachse
- D1: Dicke des Chipmoduls
- D2: Dicke der Miniaturchipkarte

## Patentansprüche

1. Chipkarte mit einem Kartenkörper (1), wobei:
- eine Miniaturchipkarte (4) aus dem Kartenkörper (1) heraustrennbar ist;
- in der Miniaturchipkarte ein integrierter Halbleiterschaltkreis (81) eingebracht ist;
- der Kartenkörper (1) entlang der Außenkontur der Miniaturchipkarte (4) bis auf zwei Verbindungen einen vollumfänglichen Spalt (7) aufweist, durch die die Miniaturchipkarte (4) in dem Kartenkörper (1) gehalten wird;
**dadurch gekennzeichnet, dass**
- die zwei Verbindungen (6) an nur einer Seitenkante der Außenkontur der Miniaturchipkarte (4) angeordnet sind;
- beide Verbindungen (6) als Stege (5) ausgeformt sind, wobei die Stegbreite (51) der zwei Stege (5) maximal der Hälfte der jeweiligen Seitenkantenlänge entspricht;
- die zwei Stege (5) auf einer Rotationsachse (R-R') angeordnet sind; und
- die Rotationsachse (R-R') parallel aber beabstandet (d3) von der Längsachse (L-L') oder der Querachse (Q-Q') der Miniaturchipkarte (4) verläuft.

2. Chipkarte nach Anspruch 1, wobei die Stegbreite (51) an der schmalsten Stelle des jeweiligen Stegs (5) maximal 4 Millimeter beträgt.

3. Chipkarte nach Anspruch 1 oder 2, wobei der Halbleiterschaltkreis (81) in einer Kavität (9) der Miniaturchipkarte (4) eingebracht ist und der Abstand (d1) zwischen dem Außenrand der Kavität (9) und zumindest einer Seitenkante mit Steg (5) größer ist, als der Abstand (d2) zwischen dem Außenrand der Kavität (9) und den übrigen Seitenkanten.

4. Chipkarte nach einem der vorhergehenden Ansprüche, wobei zumindest einer der zwei Stege (5) eine vorder- und/ oder rückseitige Einkerbung (10) aufweist.

5. Chipkarte nach einem der vorhergehenden Ansprüche, wobei die zwei Stege (5) an nur einer Seitenkante der Miniaturchipkarte (4) angeordnet sind.

6. Chipkarte nach einem der vorhergehenden Ansprüche, wobei die Miniaturchipkarte (5) siebenhundert Mikrometern dick ist.

7. Chipkarte nach einem der vorhergehenden Ansprüche, wobei die Miniaturchipkarte (4) eine Außenkontur aufweist, die gemäß der Standardisierung ISO/IEC 7816-2 für Chipkarten des vierten Formfaktors (4FF) vorgeschrieben sind.

8. Chipkarte nach einem der vorhergehenden Ansprüche, wobei die Miniaturchipkarte (4) eine erste Seitenkantenlänge von 12,3 Millimeter und eine zweite Seitenkantenlänge von 8,8 Millimeter aufweist.

9. Heraustrennen der Miniaturchipkarte (4) aus einer Chipkarte gemäß einem der vorhergehenden Ansprüche, und Verwendung der herausgetrennten Miniaturchipkarte (4) als Teilnehmererkennungsmodul (SIM) für ein Mobilfunknetzwerk in einem Endgerät.

10. Verfahren zur Herstellung einer Chipkarte gemäß einem der Ansprüche 1 bis 8 mit den Verfahrensschritten:
- Herstellen eines flächigen Trägers in einem ersten Format (ID-1) in einem Spritzguss- oder Laminierverfahren
- Einbringen einer Kavität (9);
- Stanzen eines vollumfänglichen Spalts (7) entlang der Außenkontur der Miniaturchipkarte (4), wobei der Spalt (7) an den Stellen der zwei Stege (5) unterbrochen ist;
- Einbringen des Halbleiterschaltkreises (81) in die Kavität (9); und
- Optisches sowie elektrisches Personalisieren der Chipkarte.

11. Verfahren nach Anspruch 10, wobei die Miniaturchipkarte (4) vollumfänglich entlang seiner Außenkontur vor dem Stanzschritt vorgestanzt wird, sodass die nach dem Stanzschritt vorhandenen zwei Stege (5) eingekerbt (10) sind.

12. Verfahren nach einem der Ansprüche 10 bis 11, wobei der Halbleiterschaltkreis (81) mittels Heißsiegeltechnik, Flüssigkleber und oder druckaktivierbarem Kleber in die Kavität (9) eingeklebt wird.

13. Verfahren zur Herstellung der Chipkarte gemäß den Ansprüchen 1 bis 8 mittels eines Spritzgussverfahrens.

## Claims

1. A chip card with a card body (1), wherein:
- a miniature chip card (4) is detachable from the card body (1);
- into the miniature chip card an integrated semiconductor circuit (81) is introduced;
- the card body (1) has a fully circumferential gap (7) along the outer contour of the miniature chip card (4), except for two connections by which the miniature chip card (4) is held in the card body (1);
**characterized in that:**
- the two connections (6) are arranged on only one side edge of the outer contour of the miniature chip card (4);
- both connections (6) are formed as webs (5), wherein the web width (51) of two webs (5) corresponds maximally to half of the respective side edge length;
- the two webs (5) are arranged on a rotation axis (R-R'); and
- the rotation axis (R-R') extends parallel to but spaced (d3) from the longitudinal axis (L-L') or the transverse axis (Q-Q') of the miniature chip card (4).

2. The chip card according to claim 1, wherein the web width (51) at the narrowest point of the respective web (5) amounts to maximally 4 millimeters.

3. The chip card according to claim 1 or 2, wherein the semiconductor circuit (81) is introduced in a cavity (9) of the miniature chip card (4) and the distance (d1) between the outer edge of the cavity (9) and at least one side edge with web (5) is greater than the distance (d2) between the outer edge of the cavity (9) and the other side edges.

4. The chip card according to any of the preceding claims, wherein at least one of the two webs (5) has a front-side and/or back-side notch (10).

5. The chip card according to any of the preceding claims, wherein the two webs (5) are arranged on only one side edge of the miniature chip card (4).

6. The chip card according to any of the preceding claims, wherein the miniature chip card (5) is seven hundred micrometers thick.

7. The chip card according to any of the preceding claims, wherein the miniature chip card (4) has an outer contour which is obligatory for chip cards of the fourth form factor (4FF) in accordance with the standardization ISO/IEC 7816-2.

8. The chip card according to any of the preceding claims, wherein the miniature chip card (4) has a first side edge length of 12.3 millimeters and a second side edge length of 8.8 millimeters.

9. Detachment of the miniature chip card (4) from a chip card according to any of the preceding claims, and use of the detached miniature chip card (4) as subscriber identification module (SIM) for a mobile communication network in a terminal.

10. A method for manufacturing a chip card according to any of the claims 1 to 8 with the method steps of:
- manufacturing a flat carrier in a first format (ID-1) in an injection molding or laminating method,
- introducing a cavity (9);
- punching a fully circumferential gap (7) along the outer contour of the miniature chip card (4), wherein the gap (7) is interrupted at the locations of the two webs (5);
- introducing the semiconductor circuit (81) into the cavity (9); and
- optical and electrical personalization of the chip card.

11. The method according to claim 10, wherein the miniature chip card (4) is prepunched fully circumferentially along its outer contour before the punching step, so that the two webs (5) present after the punching step are notched (10).

12. The method according to any of the claims 10 to 11, wherein the semiconductor circuit (81) is adhesively fixed in the cavity (9) by means of heat-sealing technology, liquid adhesive and/or pressure-activatable adhesive.

13. A method for manufacturing the chip card according to the claims 1 to 8 by means of an injection molding method.

## Revendications

1. Carte à puce ayant un corps de carte (1), cependant que :
- une carte à puce miniature (4) peut être enlevée du corps de carte (1) ;
- dans la carte à puce miniature, un circuit intégré à semi-conducteur (81) est inséré ;
- le corps de carte (1) présente le long du contour extérieur de la carte à puce miniature (4) une fente (7) sur tout le pourtour, hormis deux raccordements par lesquels la carte à puce miniature (4) est maintenue dans le corps de carte (1) ;
**caractérisée en ce que**
- les deux raccordements (6) ne sont disposés qu'à une arête latérale du contour extérieur de la carte à puce miniature (4) ;
- les deux raccordements (6) sont réalisés sous forme de traverses (5), le largeur de traverse (51) des deux traverses (5) correspondant au maximum à la moitié de la longueur respective d'arête latérale ;
- les deux traverses (5) sont disposées sur un axe de rotation (R-R') ; et
- l'axe de rotation (R-R') a un tracé parallèle mais espacé (d3) de l'axe longitudinal (L-L') ou de l'axe transversal (Q-Q') de la carte à puce miniature (4).

2. Carte à puce selon la revendication 1, cependant que la largeur de traverse (51) est, à l'endroit le plus étroit de la traverse (5) respective, d'au maximum 4 millimètres.

3. Carte à puce selon la revendication 1 ou 2, cependant que le circuit intégré à semi-conducteur (81) est inséré dans une cavité (9) de la carte à puce miniature (4), et que l'espacement (d1) entre le bord extérieur de la cavité (9) et au moins une arête latérale avec traverse (5) est supérieur à l'espacement (d2) entre le bord extérieur de la cavité (9) et les autres arêtes latérales.

4. Carte à puce selon une des revendications précédentes, cependant qu'au moins une des deux traverses (5) comporte une incision (10) avant et/ou arrière.

5. Carte à puce selon une des revendications précédentes, cependant que les deux traverses (5) sont disposées à seulement une arête latérale de la carte à puce miniature (4).

6. Carte à puce selon une des revendications précédentes, cependant que la carte à puce miniature (5) a une épaisseur de sept cents micromètres.

7. Carte à puce selon une des revendications précédentes, cependant que la carte à puce miniature (4) présente un contour extérieur tel que ceux qui sont prescrits conformément à la standardisation ISO/IEC 7816-2 pour cartes à puce du quatrième facteur de forme (4FF).

8. Carte à puce selon une des revendications précédentes, cependant que la carte à puce miniature (4) présente un première longueur d'arête latérale de 12,3 millimètres et une deuxième longueur d'arête latérale de 8,8 millimètres.

9. Enlèvement d'une carte à puce miniature (4) d'une carte à puce selon une des revendications précédentes, et utilisation de la carte à puce miniature (4) enlevée en tant que module de reconnaissance d'abonné (SIM) pour un réseau de radiocommunication mobile dans un terminal.

10. Procédé de fabrication d'une carte à puce selon une des revendications de 1 à 8, comprenant les étapes de procédé :
- fabrication d'un support en forme de feuille en un premier format (ID-1) par procédé de moulage par injection ou de laminage
- génération d'une cavité (9) ;
- découpage d'une fente (7) sur tout le pourtour le long du contour extérieur de la miniature (4), cependant que la fente (7) est interrompue aux endroits des deux traverses (5) ;
- insertion du circuit intégré à semi-conducteur (81) dans la cavité (9) ; et
- personnalisation optique ainsi qu'électrique de la carte à puce.

11. Procédé selon la revendication 10, cependant que la carte à puce miniature (4) est prédécoupée sur tout le pourtour le long de son contour extérieur avant l'étape du découpage, de telle façon que les deux traverses (5) obtenues après l'étape du découpage sont incisées (10).

12. Procédé selon une des revendications de 10 à 11, cependant que le circuit intégré à semi-conducteur (81) est collé dans la cavité (9) au moyen de technique de thermoscellage, de colle liquide et/ou de colle activable par pression.

13. Procédé de fabrication de la carte à puce selon une des revendications de 1 à 8 au moyen d'un procédé de moulage par injection.
